# EUROPEAN PATENT APPLICATION

(11) **EP 4 483 993 A1**
(43) Date of publication of application: **01.01.2025**
(21) Application number: 23759750.5
(22) Date of filing: 13.02.2023
(51) Int. Cl.: B01D 63/06, F16K 15/04

(54) **SEPARATION MEMBRANE MODULE, SEPARATION MEMBRANE MODULE UNIT, AND METHOD FOR OPERATING SAME**

(30) Priority: 22.02.2022 JP 2022025862
(71) Applicant: Mitsubishi Chemical Corporation, Tokyo 100-8251 (JP)
(72) Inventor: TANABE, Nobutake, Tokyo 100-8251 (JP)
(74) Representative: Hoffmann Eitle
(86) International application number: PCT/JP2023/004725
(87) International publication number: WO 2023/162747

(57) **Abstract**

Provided is a separation membrane module that can stop outflow of fluid from a damaged tubular separation membrane when the tubular separation membrane is damaged. The separation membrane module 1 has a cylindrical housing 2 and tubular separation membranes arranged in a longitudinal direction of the housing 2. An emergency valve provided on one end side of damaged tubular separation membrane 3 closes when the tubular separation membrane 3 is damaged.

## Description

### Technical Field

The present invention relates to a separation membrane module used to separate some components from a fluid such as a solution and a mixed gas, and an operation method thereof.

### Background Art

Separation membrane modules are known as devices for separating components in a solution or a mixed gas. A tubular separation membrane used in a separation membrane module has a tubular support made of porous ceramic and a porous separation membrane made of zeolite or the like formed on an outer peripheral surface of the support. Known methods for separating a specific component from a fluid such as a solution or a mixed gas include a method comprising contacting the fluid of the solution with one side (outer surface) of a separation membrane element and reducing the pressure on the other side (the inside of the element) whereby vaporizing and separating the specific component; a method comprising vaporizing the solution and contacting the vapor in a gaseous state with the separation membrane, and reducing the pressure on the non-contact side whereby separating the specific component; and, a method comprising contacting a pressurized mixed gas with the separation membrane to separate the specific component (Patent Literatures 1 to 3).

In a separation membrane module in which a separation membrane is installed in a housing, when the membrane or its support cracks or breaks, or when mechanical or chemical deterioration occurs in a seal member, a treated fluid will suddenly flow from a primary side (treated fluid side) to a secondary side (permeated fluid side), and high pressure will be suddenly applied to a piping, an equipment, and other facilities connected to the secondary side.

Patent Literature 3 describes a separation membrane module that prevents the sudden application of high pressure to the secondary side when a defect occurs in the membrane, the support, or the seal. The separation membrane module has an emergency valve in the permeated fluid flow path that closes or reduces a valve opening when the pressure or flow rate of the permeated fluid flowing out from the separation membrane module to the permeated fluid flow path exceeds a predetermined value.

### Citation List

### Patent Literature

Patent Literature 1: JP 2013-39546 A
Patent Literature 2: JP 2011-152507 A
Patent Literature 3: JP 2020-81920 A

### Summary of Invention

### Technical Problem

A number of tubular separation membranes are arranged inside a housing of a separation membrane module. In the separation membrane module of Patent Literature 3, even when a part of the tubular separation membranes, for example, only one tubular separation membrane, is damaged, the permeated fluid flow path connected to the separation membrane module is closed, resulting that it is necessary to stop the separation operation in the separation membrane module.

An object of the present invention is to provide a separation membrane module or separation membrane module unit that can stop the outflow of fluid only from the damaged tubular separation membrane when a part of the tubular separation membranes are damaged, and a method for operating the same.

### Solution to Problem

The gist of the present invention is as follows.
[1] A separation membrane module comprising:
   a housing; and
   at least one tubular separation membrane arranged within the housing,
   in which a fluid to be treated is supplied into the housing, and the fluid that has permeated the tubular separation membrane flows out of the housing from one end side of the tubular separation membrane, and is taken out through a permeated fluid outflow chamber in the housing,
   wherein an emergency valve that closes when the pressure or flow rate of the fluid flowing out from the tubular separation membrane to the permeated fluid outflow chamber exceeds a predetermined value is provided on the one end side of each tubular separation membrane.
[2] The separation membrane module according to [1], wherein an end tube is connected to the one end side of the tubular separation membrane, and
   the end tube has a tube hole,
   wherein the emergency operation valve comprises:
      a valve body disposed within the tubular separation membrane and being capable of abutting against the end face of the end tube to close the tube hole; and
      an elastic body at least a portion of which is disposed within the tubular separation membrane and holds the valve body at a predetermined distance from the end face of the end tube.
[3] The separation membrane module according to [2], wherein the maximum displacement of the elastic body when stress is applied thereto is equal to or greater than the distance between the valve body and the end face of the end tube in a state where the separation membrane module is stopped.
[4] The separation membrane module according to [1], wherein an end tube is connected to one end of the tubular separation membrane, the end tube having the tube hole, and
   wherein the emergency operation valve comprises:
   a valve body arranged in the middle of the tube hole of the end tube;
   a valve seat surface on which the valve body is capable of sitting from the tubular separation membrane side; and
   an elastic body arranged in the tube hole and holding the valve body at a predetermined distance from the valve seat surface.
[5] The separation membrane module according to [4], wherein the maximum displacement of the elastic body when stress is applied thereto is equal to or greater than the distance between the valve body and the valve seat surface in a state where the separation membrane module is stopped.
[6] The separation membrane module according to any one of [2] to [5], wherein the elastic body is a spring.
[7] The separation membrane module according to [6], wherein the end tube is installed on a support plate in the separation membrane module,
   the support plate has a small hole communicating the inside of the tube hole with the outflow chamber for the permeated fluid, and
   the outer diameter of the spring is larger than the diameter of the small hole.
[8] The separation membrane module according to any one of [1] to [7], wherein a plurality of the tubular separation membranes are arranged.
[9] A method for operating the separation membrane module according to [8], wherein the separation membrane module continues to operate even after part of the emergency operation valves are closed.
[10] A method for operating the separation membrane module according to any one of [1] to [8], wherein a supply amount of the fluid to be treated to the separation membrane module is gradually reduced after at least one of the emergency operation valves is closed.
[11] A separation membrane module unit comprising a plurality of separation membrane modules according to any one of [1] to [8] arranged in parallel.
[12] A method for operating the separation membrane module unit according to [11], wherein the separation membrane module unit continues to operate even after part of the emergency operation valves are closed.

### Advantageous Effects of Invention

In the separation membrane module or separation membrane module unit and its operating method of the present invention, when a part of the multiple tubular separation membranes are damaged and the pressure or flow rate of the fluid flowing out from the tubular separation membrane to the outflow chamber increases, the emergency operation valve provided on the tubular separation membrane closes. Therefore, even with a simple mechanism, the treated fluid that has passed through the damaged area is immediately prevented from flowing into the outflow chamber.

### Brief Description of the Drawings

[Fig. 1] Fig. 1 is a cross-sectional view along a housing axis of a separation membrane module according to an embodiment.
[Fig. 2] Fig. 2 is a cross-sectional view taken along line II-II in Fig. 1.
[Fig. 3] Fig. 3 is a cross-sectional view taken along line III-III in Fig. 1.
[Fig. 4] Fig. 4 is an enlarged cross-sectional view of an end tube and a support plate.
[Fig. 5] Fig. 5 is an enlarged cross-sectional view of an end tube and a support plate in a state where a part of the emergency operation valves is closed.
[Fig. 6] Fig. 6 is an enlarged cross-sectional view of an end tube and a support plate showing another embodiment.
[Fig. 7] Fig. 7 is an enlarged cross-sectional view of an end tube and a support plate showing another embodiment.
[Fig. 8] Fig. 8 is an enlarged cross-sectional view of an end tube and a support plate showing another embodiment.

### Description of Embodiments

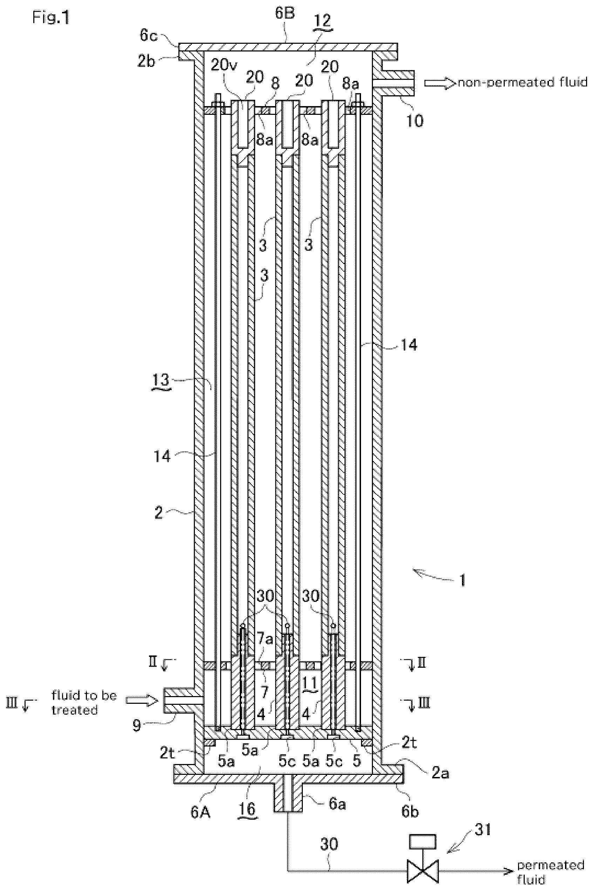

A separation membrane module according to one embodiment of the present invention will be described with reference to Figs. 1 to 5.

A separation membrane module 1 has a cylindrical housing 2 arranged such that a cylinder axis directs in the up-down direction, a plurality of tubular separation membranes 3 arranged in a direction parallel to the axial direction of the housing 2, a support plate 5 provided at the lower part in the housing 2, a bottom cover 6A attached to the lower end of the housing 2 and a top cover 6B attached to the upper end, a first baffle (baffle plate) 7 and a second baffle (baffle plate) 8 arranged parallel to the support plate 5 at the lower and upper parts of the housing 2 respectively. The first baffle 7 is arranged above the support plate 5.

In this embodiment, outward flanges 2a, 2b, 6b, and 6c are provided on the lower and upper ends of the housing 2 and on the outer periphery of the bottom cover 6A and the top cover 6B, respectively. The lapped flanges are fixed with bolts (not shown). By making the bottom cover 6A openable and closable, it is easy to identify which tubular separation membrane 3 is damaged when a part of the tubular separation membranes 3 is damaged, so that quick replacement becomes possible. The peripheral portion of the support plate 5 is supported by a support seat 2t provided around the inner periphery of the housing 2. A seal member is interposed between the outer periphery of the lower surface of the support plate 5 and the upper surface of the support seat 2t.

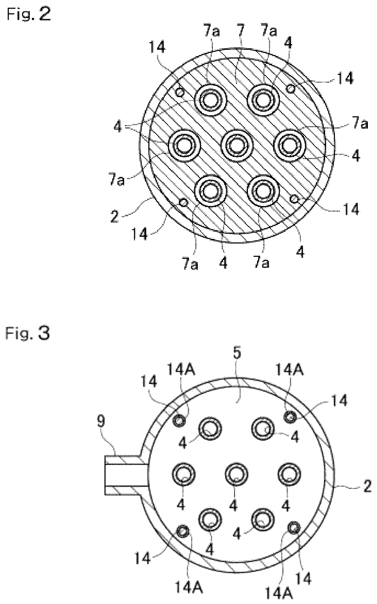

In this embodiment, an end tube 4 is connected to the lower end of the tubular separation membrane 3, and an end plug 20 is connected to the upper end of the tubular separation membrane 3. Although only seven tubular separation membranes are shown in Figs. 2 and 3, the number of tubular separation membranes can be set as appropriate, as described below. In addition, two or more tubular separation membranes may be connected by a joint pipe (not shown) to form a tubular separation membrane assembly.

An inlet 9 for a fluid to be treated is provided on the outer peripheral surface of the lower part of the housing 2, and an outlet 10 for the non-permeated fluid is provided on the outer peripheral surface of the upper part. The inlet 9 is provided so as to face a chamber 11 between the support plate 5 and the first baffle 7. The outlet 10 is provided so as to face a chamber 12 above the second baffle 8. The space between the baffles 7 and 8 forms a main chamber 13 for membrane separation.

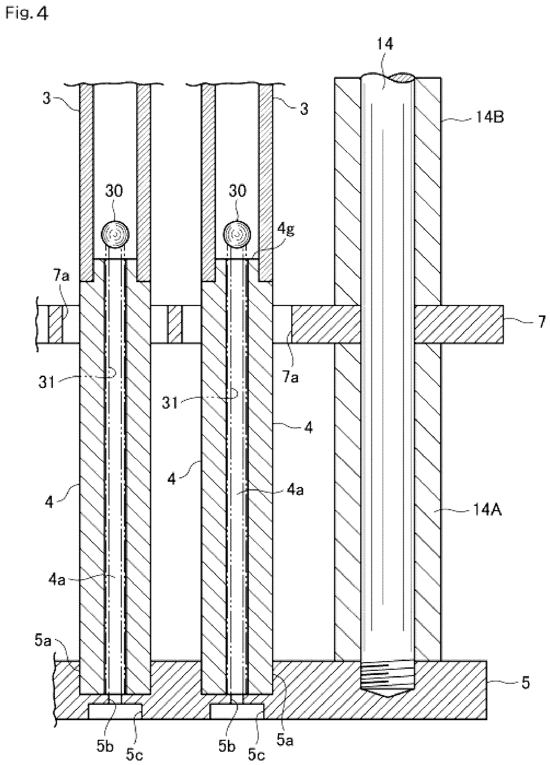

A plurality of rods 14 are provided to extend from the support plate 5 at the bottom portion, and the baffles 7 and 8 are supported by the rods 14. The lower ends of the rods 14 are male threaded and screwed into female threaded holes in the support plate 5. The baffles 7 and 8 are supported at a predetermined height by sheath tubes 14A and 14B (Fig. 4) fitted onto the rods 14. The sheath tube 14A is disposed between the support plate 5 and the baffle 7. The sheath tube 14B is disposed between the baffles 7 and 8. The baffle 8 is placed on the upper end surface of the sheath tube 14B and is fixed by a nut screwed onto the upper end of the rod 14. The number of baffles is not limited to this embodiment, and three or more baffles may be used.

A sealing member such as an O-ring, V-packing, or C-ring may be interposed between the outer peripheral surface of the baffles 7 and 8 and the inner peripheral surface of the housing 2.

Each baffle 7 and 8 is provided with circular insertion holes 7a, 8a for inserting the tubular separation membrane 3. A connected body of the tubular separation membrane 3, the end tube 4, and the end plug 20 is inserted into each insertion hole 7a, 8a. The diameter of the insertion holes 7a, 8a is larger than the diameter (outer diameter) of the tubular separation membrane 3, the end tube 4, and the end plug 20, and a gap is provided around the entire circumference between the inner peripheral surface of the insertion holes 7a, 8a and the outer peripheral surfaces of the end tube 4 and the end plug 20.

Insertion hole 5a are formed in the upper surface side of the support plate 5. The lower end of each end tube 4 connected to the tubular separation membrane 3 is inserted into the insertion hole 5a. The insertion hole 5a is cylindrical and extends from the upper surface of the support plate 5 halfway in the thickness direction of the support plate 5a. The bottom of the insertion hole 5a communicates with the outflow chamber 16 below the support plate 5 via a small hole 5b and a large hole 5c. The diameter of the small hole 5b is smaller than the inner diameter of the lower end of the end tube 4.

A tube hole 4a of each end tube 4 communicates with the outflow chamber 16 for the permeated fluid provided between the bottom cover 6A and the support plate 5 through the small hole 5b and the large hole 5c. The bottom cover 6A is provided with an outlet 6a for the separated permeated fluid.

Although not shown, each end tube 4 is provided with a groove around the outer circumferential surface near the lower end of the end tube 4, and an O-ring made of fluororubber, fluororesin, or the like is arranged therein. In addition, a groove is provided around the lower end surface of the end tube 4, such that the groove is concentric with the tube hole 4a of the end tube 4, and an O-ring is arranged therein. These O-rings are in close contact with the inner circumferential surface of the insertion hole 5a and the bottom surface of the insertion hole 5a, thereby sealing is formed between the outer surface of the end tube 4 and the insertion hole 5a. Note that only one of the O-ring on the outer circumferential surface of the end tube 4 and the O-ring on the lower end surface may be provided.

The lower end of the end tube 4 may be fixed to the insertion hole 5a by screwing. In this case, if the shape of the screw is tapered, an O-ring does not need to be used.

As shown in Fig. 4, a small diameter section 4g is formed at the upper end of the end tube 4, which is inserted into the lower part of the tubular separation membrane 3. Although not shown, an O-ring is arranged in a groove provided around the outer periphery of this small diameter section 4g. In addition, an O-ring is also interposed between the lower end face of the tubular separation membrane 3 and the step face of the end tube 4. The connecting part between the end tube 4 and the tubular separation membrane 3 may be sealed by using a heat shrink tube without using the O-ring described above, or a heat shrink tube may be used in addition to the O-ring.

As shown in Fig. 4, a valve body 30 is disposed at the lower part of the tubular separation membrane 3 and a predetermined distance above the upper end face of the end tube 4. The valve body 30 is supported by a spring 31 as an elastic body. The elastic body is preferably a spring because it has a gap through which the fluid passes and is easily available.

The spring 31 is made of a coil spring and is inserted into the tube hole 4a of the end tube 4. The lower end of the spring 31 abuts against the upper circumference part of the small hole 5b of the support plate 5. The upper end of the spring 31 protrudes into the inside of the tubular separation membrane 3 and supports the valve body 30.

The spring 31 has an outer diameter larger than the diameter of the small hole 5b for preventing the spring 31 from falling out of the small hole 5b. Instead of making the outer diameter of the spring 31 larger than the diameter of the small hole 5b, a ring-shaped plate having an opening with an opening diameter smaller than the outer diameter of the spring 31 may be placed on the surface of the small hole 5b facing the tubular separation membrane 3.

In this embodiment, the valve body 30 is spherical. The diameter of the spherical valve body 30 is larger than the diameter of the tube hole 4a of the end tube 4 and smaller than the inner diameter of the tubular separation membrane 3.

The cross-sectional area of the gap between the valve body 30 and the inner peripheral surface of the tubular separation membrane 3 in the direction perpendicular to the longitudinal direction of the tubular separation membrane 3 is preferably equal to or larger than the opening area of the small hole 5b, from the viewpoint of reducing the flow resistance of the permeated fluid.

The valve body 30 and the spring 31 are preferably connected so as not to separate due to vibration during separation operation or transporting.

The length of the spring 31 is set so that the maximum displacement when stress is applied is equal to or larger than the distance between the valve body 30 and the upper end surface of the end tube 4 when the separation membrane module 1 is not in operation, so that the upper end of the end tube 4 is reliably closed by the valve body 30 in the event of membrane damage.

The spring constant of the spring 31 is set so that the valve body 30 does not close the upper end surface of the end tube 4 during steady operation, and yet the valve body 30 closes the upper end surface of the end tube 4 in the event of membrane damage (emergency).

When the fluid pressure applied to the valve element 30 from above reaches or exceeds a predetermined pressure, the valve body 30 abuts against the edge of the tube hole 4a at the upper end surface of the end tube 4 so as to close the tube hole 4a. Therefore, in this embodiment, the valve body 30, the spring 31, and the edge (valve seat) of the tube hole 4a at the upper end surface of the end tube 4 constitute an emergency operation valve. It is preferable to make the edge of the tube hole 4a at the upper end surface of the end tube 4 a tapered surface from the viewpoint of the emergency operation valve reliably closing the end of the end tube 4.

In this embodiment, the inner diameter of the tube hole 4a of the end tube 4 is constant, but a small diameter portion may be provided midway through the end tube 4, and the lower end of the spring 31 may abut against the small diameter portion.

The end plug 20 is connected to the upper end of the tubular separation membrane 3. The end plug 20 is columnar or has a shape with a part cut off, and seals the upper end of the tubular separation membrane 3. The lower end of the end plug 20 is provided with a small diameter portion that is inserted into the tubular separation membrane 3. The gap between the end plug 20 and the tubular separation membrane 3 is sealed with an O-ring. The end plug 20 and the tubular separation membrane 3 may be sealed with a heat shrink tube instead of an O-ring, or a heat shrink tube may be used in addition to the O-ring.

In order to reduce the weight of the end plug 20, a recess 20v is recessed from the upper end surface of the end plug 20. A drain hole may be provided that communicates between the bottom of the recess 20v and the side peripheral surface of the end plug 20.

In this embodiment, the end plug 20 is disposed on the upper end side of the tubular separation membrane 3, so that a load thereof is applied to the tubular separation membrane 3, the end plug 20, and the end tube 4 in a direction in which their end faces are pressed against each other.

In the separation membrane module 1 configured in this manner, the fluid to be treated is introduced into the chamber 11 of the housing 2 through the inlet 9, flows into the main chamber 13 through the gap between the inner circumferential surface of the insertion hole 7a of the baffle 7 and the outer circumferential surface of the end tube 4, and after passing through the main chamber 13, flows out into the chamber 12 through the gap between the insertion hole 8a of the baffle 8 and the end plug 20. While flowing through the main chamber 13, some components of the fluid to be treated permeate the tubular separation membrane 3 and are taken out from the inside of the tubular separation membrane 3 via the tube hole 4a of the end tube 4, the permeated fluid outflow chamber 16, and the outlet 6a. The fluid that has not permeated flows out of the separation membrane module 1 through the outlet 10.

The flow in the main chamber 13 and the flow in the tubular separation membrane 3 may be parallel or counter. The inlet 9 and outlet 10 of the treated fluid may be interchanged. That is, the fluid to be treated may be introduced into the chamber 12 through the port 10, and flow out through the port 9 via the chambers 13 and 11.

In this embodiment, a large number of tubular separation membranes 3 are arranged in parallel, and the membrane area is large, so that membrane separation is performed efficiently.

In this embodiment, the end tubes 4 and end plugs 20 connected to the upper and lower ends of the tubular separation membrane 3 are inserted into the insertion holes 7a and 8a of the baffles 7 and 8, respectively. Therefore, even if the tubular separation membrane 3 vibrates or swings and the end tubes 4 and end plugs 20 come into contact with the inner surfaces of the insertion holes 7a and 8a, the zeolite membrane is not damaged, and stable operation can be performed for a long period of time.

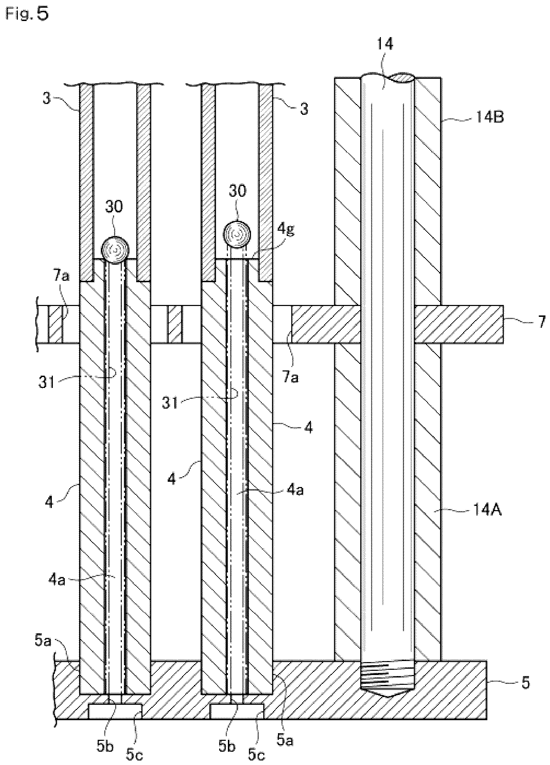

In this separation membrane module 1, when a small number (one or more) of tubular separation membranes 3, for example the tubular separation membrane 3 on the left side of FIG. 4, are damaged and the fluid pressure applied from above to the valve body 30 exceeds a predetermined pressure, the valve body 30 comes into contact with the edge of the tube hole 4a on the upper end surface of the end tube 4 so as to close the tube hole 4a, as shown in the end tube 4 on the left side of FIG. 5.

This prevents the fluid from flowing out of the damaged tubular separation membrane 3 into the outflow chamber 16. Therefore, it is possible to immediately stop the flow of the fluid to be treated that has not been subjected to membrane separation treatment into the permeated fluid outflow chamber 16. This emergency valve has a simple structure and is highly durable.

In this separation membrane module 1, when the operation of the separation membrane module 1 is stopped after the emergency valve is closed, it is preferable to slowly reduce the pressure of the treated fluid at the inlet 9 of the separation membrane module 1 in order to suppress the sudden movement of the valve body 30 of the emergency valve. The rate of pressure reduction is preferably, for example, 0.10 MPa/s or less.

Furthermore, when the operation is stopped, it is preferable to keep the pressure of the permeated fluid at the outlet 6a lower than the pressure of the main chamber 13 in order to lengthen the closing time of the valve body 30 of the emergency operating valve and gradually return it to the stationary position.

Note that when the emergency operating valve is closed, the operation of the separation membrane module 1 may be continued after that, and then the operation of the module 1 may be stopped.

To identify which tubular separation membrane is damaged after the operation of the separation membrane module 1 is stopped, in the first instance, the bottom cover 6A of the separation membrane module 1 is opened. Next, a pressurized fluid is supplied through the inlet 9 to the main chamber 13 via the chamber 11. Then, the flow rate of the fluid flowing out of each large hole 5c is detected, and the large hole 5c with the highest flow rate is identified. The identification of the damaged membrane can be performed by the method described in JP 2020-192482 A, but is not limited to this method.

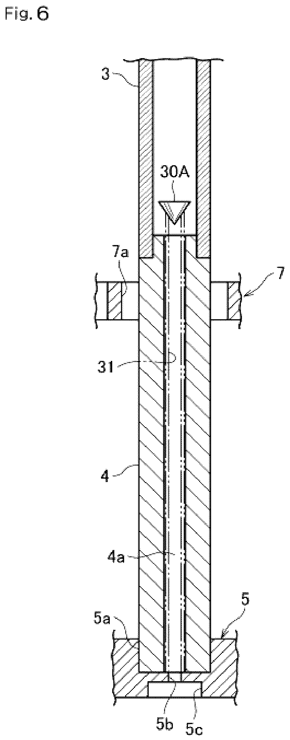

In the above embodiment, the valve body 30 is spherical, but it may be conical with a smaller diameter toward the bottom, as in the valve body 30A in FIG. 6. Although not shown, the valve body may be frustum-shaped, or may be substantially columnar with a tapered outer periphery at the bottom end.

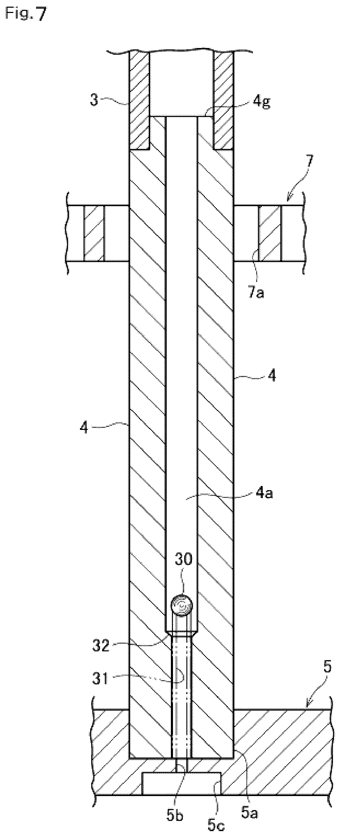

In the above embodiment, the edge of the tube hole 4a in the upper end surface of the end tube 4 is the valve seat surface, but as shown in FIG. 7, a valve seat surface 32 may be formed midway through the tube hole 4a, and the valve body 30 may be seated on the valve seat surface 32 from above to close the valve. By adopting this form, it is possible to suppress the effect of the displacement of the valve body 30 due to vibration during the separation operation. Note that the valve seat surface 32 is tapered, but is not limited to this.

In this embodiment, the cross-sectional area of the gap between the valve body 30 and the inner peripheral surface of the tube hole 4a in the direction perpendicular to the tube axis direction of the end tube 4a is preferably equal to or larger than the cross-sectional area of the small hole 5b in order to reduce the flow resistance of the permeated fluid.

The inner diameter of the tube hole 4a above the valve seat surface 32 is larger than the inner diameter below the valve seat surface 32. The inner diameter of the tube hole 4a above the valve seat surface 32 is also larger than the diameter of the valve body 30 in FIG. 7.

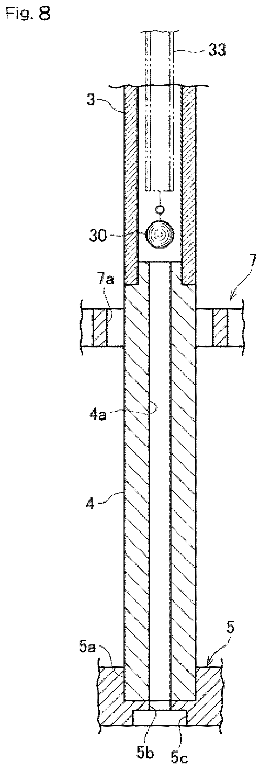

In all of the above embodiments, the valve bodies 30 and 30A are supported from below by the spring 31, but they may be suspended from a spring (coil spring) 33 arranged above the valve body 30 as shown in FIG. 8. The upper end of the spring 33 is attached to the end plug 20.

In the above embodiment, the lower end of the end tube 4 connected to the tubular separation membrane 3 is inserted into the insertion hole 5a provided on the upper surface side of the support plate 5, but the present invention is not limited thereto. For example, instead of the support plate 5 and the outflow chamber 16 partitioned by the support plate 5, a collection chamber may be provided, and an insertion hole may be provided on the upper surface side of the collection chamber, into which the lower end of the end tube connected to the tubular separation membrane is inserted, as described in International Publication WO 2020/004381.

In the above embodiment, the cross-sectional shapes of the tube hole 4a of the end tube 4, the valve seat surface 32, and the valve body 30, 30A are circular, but any shape may be used as long as the valve body 30 can reliably close the end of the end tube 4, and may be polygonal. In the case of a polygon, the diameter is the length of the longest line segment in the figure.

The separation membrane module unit of the present invention will be described below.

The separation membrane module unit of the present invention is a unit in which multiple separation membrane modules are connected in parallel.

The separation membrane module included in the separation membrane module unit has the same structure as the separation membrane module described above, except that it has one or more tubular separation membranes 3.

When each module included in the separation membrane unit has one tubular separation membrane 3, even if a part of the tubular separation membranes are damaged, the treated fluid that has passed through the damaged area is immediately prevented from flowing into the outflow chamber, and the operation of the remaining separation membrane modules can be continued, even with a simple mechanism. In other words, the operation of the separation membrane unit can be continued.

The operation and stop of the separation membrane unit can be performed in the same manner as the operation and stop of the separation membrane module described above.

The following describes suitable materials for each member constituting the separation membrane module of the present invention.

Examples of materials for the end tubes 4 and end plugs 20 include metals, ceramics, resins, and other materials that do not allow fluids to pass through them, but are not limited to these. The materials for the baffles 7, 8 and joint tubes are usually metal materials such as stainless steel, but are not particularly limited as long as they have heat resistance under separation conditions and resistance to the supply and permeated components, and can be changed to other materials such as resin materials depending on the application.

The tubular separation membrane 3 preferably has a tubular porous support and a zeolite membrane as an inorganic separation membrane formed on the outer peripheral surface of the porous support. Examples of materials for this tubular porous support include inorganic porous supports including ceramic sintered bodies such as silica, a-alumina, γ-alumina, mullite, zirconia, titania, yttria, silicon nitride, silicon carbide, etc; and metal sintered bodies. Among these, inorganic porous supports including at least one of alumina, silica, and mullite are preferred. There are no particular restrictions on the average pore size at the porous support surface, but those with a controlled pore size are preferred, and are usually 0.02 um or more, preferably 0.05 um or more, and more preferably 0.1 um or more, and usually 20 um or less, preferably 10 um or less, and more preferably 5 um or less.

Zeolite is crystallized on the surface of the porous support to form a zeolite membrane.

The main zeolite constituting the zeolite membrane usually contains a zeolite with a 6-10 membered oxygen ring structure, and preferably contains a zeolite with a 6-8 membered oxygen ring structure.

The value of n in the zeolite with an membered oxygen ring refers to the largest number of oxygen atoms among the pores composed of oxygen and T elements that form the zeolite framework. For example, when there are pores with 12 membered oxygen rings and 8 membered oxygen rings, such as in MOR type zeolite, it is considered to be a zeolite with 12 membered oxygen rings.

Examples of zeolites with 6-10 oxygen ring structures include AEI, AEL, AFG, ANA, BRE, CAS, CDO, CHA, DAC, DDR, DOH, EAB, EPI, ESV, EUO, FAR, FRA, FER, GIS, GIU, GOO, HEU, IMF, ITE, ITH, KFI, LEV, LIO, LOS, LTN, MAR, MEP, MER, MEL, MFI, MFS, MON, MSO, MTF, MTN, MTT, MWF, MWW, NAT, NES, NON, PAU, PHI, RHO, RRO, RTE, RTH, RUT, SGT, SOD, STF, STI, STT, TER, TOL, TON, TSC, TUN, UFI, VNI, VSV, WEI, YUG, and the like.

The zeolite membrane may be a membrane of zeolite alone, a membrane formed by dispersing the zeolite powder in a binder such as a polymer and shaping into a membrane shape, or a zeolite membrane composite in which zeolite is fixed in a membrane shape on various supports. The zeolite membrane may contain amorphous components or the like as a part thereof.

The thickness of the zeolite membrane is not particularly limited, but is usually 0.1 um or more, preferably 0.6 um or more, and more preferably 1.0 um or more. It is usually 100 um or less, preferably 60 um or less, more preferably 20 um or less, even more preferably 12 um or less, and particularly preferably 10 um or less.

However, the present invention may use a tubular separation membrane having a separation membrane other than a zeolite membrane.

The outer diameter of the tubular separation membrane 3 is preferably 3 mm or more, more preferably 6 mm or more, even more preferably 10 mm or more, preferably 20 mm or less, more preferably 18 mm or less, even more preferably 16 mm or less, and particularly preferably 14 mm or less. If the outer diameter is too small, the strength of the tubular separation membrane may be insufficient and it may be easily broken, and if the outer diameter is too large, the membrane area per module will decrease.

The length of the portion of the tubular separation membrane 3 covered with the zeolite membrane is preferably 20 cm or more, and preferably 200 cm or less.

The materials of the valve bodies 30, 30A are preferably selected from a rubber-like elastic material such as silicone rubber, fluorinated rubber, butyl rubber, and natural rubber; a fluororesin such as PTFE, PFA, and PVDF; and metals such as lead, aluminum, and copper, depending on the conditions of use, because they have corrosion resistance against the permeated fluid and have appropriate deformability to reliably close the end face of the end tube. Stainless steel is preferably used as the material of the springs 31, 33, from the viewpoint of corrosion resistance against the permeated fluid.

In the separation membrane module of the present invention, the tubular separation membranes may be of a single tube type or a multi-tube type, and are usually arranged in a number of 5,000 or less, particularly 6 to 4,000, and are preferably arranged so that the shortest distance between the tubular separation membranes is 2 mm to 10 mm. The size of the housing and the number of tubular separation membranes are appropriately changed depending on the amount of fluid to be treated. In the case of a single-tube type, the separation membrane module of the present invention has a simple mechanism, yet immediately prevents the treated fluid that has passed through the damaged portion from flowing into the outflow chamber. In the case of a multi-tube type, the separation membrane module has a simple mechanism, yet immediately prevents the treated fluid that has passed through the damaged portion from flowing into the outflow chamber, and even if a part of the tubular separation membranes are damaged, the operation of the separation membrane module can be continued as before.

In the separation membrane module of the present invention, the fluid to be separated or concentrated is not particularly limited as long as it is a gas or liquid mixture consisting of multiple components that can be separated or concentrated by a separation membrane, and any mixture may be used, but it is preferable to be used for a gas mixture.

For separating or concentrating liquids, separation or concentration methods called pervaporation method or vapor permeation method can be used. The pervaporation method is a separation or concentration method in which a liquid mixture is introduced directly into a separation membrane, and therefore can simplify processes including separation or concentration.

In the present invention, when the mixture to be separated or concentrated is a gas mixture consisting of multiple components, examples of the gas mixture include those containing at least one component selected from carbon dioxide, oxygen, nitrogen, hydrogen, methane, ethane, ethylene, propane, propylene, normal butane, isobutane, 1-butene, 2-butene, isobutene, and aromatic compound such as toluene, sulfur hexafluoride, helium, carbon monoxide, nitric oxide, water, and the like. When a mixture consisting of these gas components is subjected to membrane separation, a gas component with high permeance permeates the separation membrane and is separated, and a gas component with low permeance is concentrated on the supply gas side.

Although the present invention has been described in detail using specific embodiments, it will be apparent to those skilled in the art that various modifications are possible without departing from the spirit and scope of the present invention.

The present application is based on Japanese Patent Application No. 2022-025862 filed on February 22, 2022, and is incorporated by reference in its entirety.

### Reference Signs List

1 Separation membrane module
2 Housing
3 Tubular separation membrane
4 End tube
4a Tube hole
5 Support plate
6A Bottom cover
6B Top cover
6a Outlet
7, 8 Baffle
7a, 8a Insertion hole
9 Inlet
10 Outlet
11, 12 Chamber
13 Main chamber
14 Rod
16 Outflow chamber
20 End plug
30, 30A Valve body
31, 33 Spring
32 Valve seat surface

## Claims

1. A separation membrane module comprising:
a housing; and
at least one tubular separation membrane arranged within the housing,
in which a fluid to be treated is supplied into the housing, and the fluid that has permeated the tubular separation membrane flows out of the housing from one end side of the tubular separation membrane, and is taken out through a permeated fluid outflow chamber in the housing,
wherein an emergency valve that closes when the pressure or flow rate of the fluid flowing out from the tubular separation membrane to the permeated fluid outflow chamber exceeds a predetermined value is provided on the one end side of each tubular separation membrane.

2. The separation membrane module according to claim 1, wherein an end tube is connected to the one end side of the tubular separation membrane, and
the end tube has a tube hole,
wherein the emergency operation valve comprises:
a valve body disposed within the tubular separation membrane and being capable of abutting against the end face of the end tube to close the tube hole; and
an elastic body at least a portion of which is disposed within the tubular separation membrane and holds the valve body at a predetermined distance from the end face of the end tube.

3. The separation membrane module according to claim 2, wherein the maximum displacement of the elastic body when stress is applied thereto is equal to or greater than the distance between the valve body and the end face of the end tube in a state where the separation membrane module is stopped.

4. The separation membrane module according to claim 1, wherein an end tube is connected to one end of the tubular separation membrane, the end tube having the tube hole, and
wherein the emergency operation valve comprises:
a valve body arranged in the middle of the tube hole of the end tube;
a valve seat surface on which the valve body is capable of sitting from the tubular separation membrane side; and
an elastic body arranged in the tube hole and holding the valve body at a predetermined distance from the valve seat surface.

5. The separation membrane module according to claim 4, wherein the maximum displacement of the elastic body when stress is applied thereto is equal to or greater than the distance between the valve body and the valve seat surface in a state where the separation membrane module is stopped.

6. The separation membrane module according to any one of claims 2 to 5, wherein the elastic body is a spring.

7. The separation membrane module according to claim 6, wherein the end tube is installed on a support plate in the separation membrane module,
the support plate has a small hole communicating the inside of the tube hole with the outflow chamber for the permeated fluid, and
the outer diameter of the spring is larger than the diameter of the small hole.

8. The separation membrane module according to any one of claims 1 to 7, wherein a plurality of the tubular separation membranes are arranged.

9. A method for operating the separation membrane module according to claim 8, wherein the separation membrane module continues to operate even after part of the emergency operation valves are closed.

10. A method for operating the separation membrane module according to any one of claims 1 to 8, wherein a supply amount of the fluid to be treated to the separation membrane module is gradually reduced after at least one of the emergency operation valves is closed.

11. A separation membrane module unit comprising a plurality of separation membrane modules according to any one of claims 1 to 8 arranged in parallel.

12. A method for operating the separation membrane module unit according to claim 11, wherein the separation membrane module unit continues to operate even after part of the emergency operation valves are closed.
